# FASCICULE DE BREVET EUROPEEN

(11) **EP 0 475 867 B1**
(45) Date de publication et mention de la délivrance du brevet: **01.03.1995**
(21) Numéro de dépôt: 91460042.4
(22) Date de dépôt: 13.09.1991
(51) Int. Cl.: B08B 3/04, A22C 9/00

(54) **Porte de lavage d'une machine à baratter**
Wäscher-Tür für Massagevorrichtung
Washer-door for a massaging machine

(30) Priorité: 14.09.1990 FR 9011523
(43) Date de publication de la demande: 18.03.1992
(73) Titulaire: ARMOR-INOX, F-56430 Mauron (FR)
(72) Inventeur: Dreano, Claude, F-56430 Mauron (FR)
(74) Mandataire: Le Guen, Louis François

(56) Documents cités:
- EP-A- 0 308 382
- WO-A-89/08982
- FR-A- 1 111 327
- FR-A- 2 624 242
- GB-A- 2 085 742
- NL-C- 68 934
- US-A- 2 090 191
- US-A- 3 818 818

## Description

L'invention concerne une porte de lavage destinée à être montée sur une machine à baratter des morceaux de viande, tels que des jambons, épaules, etc., lors de la phase de lavage de l'intérieur de ladite baratte, ladite porte de lavage servant alors à l'évacuation de l'eau usée et, éventuellement, à l'introduction de l'eau de lavage dans la baratte.

On connaît des machines à baratter des morceaux de viande, tels que des jambons, épaules, etc. Elles sont en général constituées d'une cuve métallique sensiblement cylindrique d'axe horizontal qui est close, à l'arrière, par une paroi sensiblement verticale et, à l'avant, par une partie tronconique dont l'ouverture d'entrée peut être obturée par une porte de barattage. A l'intérieur de la baratte, le long de la paroi interne des parties cylindrique et tronconique, sont montées une ou plusieurs lames sensiblement radiales. Un mécanisme d'entraînement est prévu pour pouvoir faire tourner, dans un sens ou dans l'autre, la cuve autour de son axe principal.

Pour le barattage, la cuve est remplie de morceaux de viande à baratter et la porte de barattage est fermée. Une telle porte de barattage est décrite dans le document FR-2 624 242. Le mécanisme d'entraînement est mis en route et la baratte tourne, dans un sens, autour de son axe principal. Du fait de son mouvement de rotation, la lame soulève une partie des morceaux de viande, et ceux-ci, entraînés jusqu'à une certaine hauteur, retombent de leur propre poids dans le fond de la cuve ce qui a pour effet de les malaxer.

Lorsque l'opération de barattage est terminée, la cuve est vidée de sa viande en ouvrant la porte de barattage et en faisant tourner la baratte à l'envers. On doit alors laver l'intérieur de la cuve. Cette opération de lavage est réalisée en y introduisant une grande quantité d'eau, plus éventuellement, un produit détergent, puis en faisant tourner la cuve selon son axe principal, dans un sens et dans l'autre pour y créer une agitation d'eau. Pour vider l'eau, on fait tourner la cuve comme pour vider la viande en entraînant l'eau vers l'avant de la baratte et l'eau sort par son ouverture d'où elle se déverse à même le sol, d'où des problèmes de salubrité.

Au repos, l'eau peut être introduite au moyen d'un tuyau classique, mais ne peut plus l'être, d'une manière propre, quand la cuve tourne.

L'invention vise à remédier à ces inconvénients et, à cette fin, propose une porte de lavage qui, d'une part, sert à l'introduction de l'eau de nettoyage et, d'autre part, à sa récupération en vue de l'amener à une bouche d'évacuation d'eau.

Une porte selon l'invention comporte donc un disque percé d'un trou central duquel part, côté externe de la porte, un tuyau d'évacuation des eaux usées, ledit disque étant tournant par rapport audit tuyau, au moins un godet placé côté interne de la porte dont l'ouverture est dans un plan radial et sa paroi de fond en retrait, pour le sens de rotation de la baratte pendant l'opération de lavage, par rapport à son ouverture, ledit godet étant en communication, par une de ses faces latérales et via le trou, avec l'intérieur du tuyau.

Selon une autre caractéristique de l'invention, elle comporte une pluralité de godets identiques et placés régulièrement autour de l'axe du disque dont les ouvertures sont sensiblement dans un plan radial et les parois de fond en retrait par rapport à ces ouvertures.

Selon une autre caractéristique de l'invention, une canne d'alimentation en eau de lavage est montée sur ladite porte et la traverse de part en part, une de ses extrémités se trouvant à l'intérieur de la cuve, ladite canne passant au milieu du trou central du disque et traversant aussi le tuyau.

Selon une autre caractéristique de l'invention, chaque godet a une première paroi latérale constituée par le disque lui-même, une seconde paroi parallèle à la surface du disque et une paroi de fond perpendiculaire aux deux autres parois.

Selon une autre caractéristique de l'invention, la paroi de fond de chaque godet est bombée avec une extrémité qui part tangentiellement au bord du disque.

Selon une autre caractéristique de l'invention, la paroi de fond de chaque godet est bombée en demi-cercle dont le diamètre est sur un diamètre du disque et a une longueur supérieure au rayon du disque.

Selon une autre caractéristique de l'invention, la paroi de fond de chaque godet comporte, au-delà du centre du disque, une partie qui est rabattue vers l'axe du disque.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:
la Fig. 1 est une vue en coupe selon un plan diamétral vertical d'une baratte équipée d'une porte de lavage selon l'invention,
la Fig. 2 est une vue en coupe selon le plan II/II de la Fig. 1 d'une baratte équipée d'une porte selon l'invention,
la Fig. 3 est une vue de la face interne d'une porte selon l'invention,
la Fig. 4 est une vue en coupe selon le plan IV/IV de la Fig. 3,
la Fig. 5 est une vue de la face interne d'une porte selon un autre de mode de réalisation de l'invention,
la Fig. 6 est une vue en coupe selon le plan VI/VI de la Fig. 5, et
la Fig. 7 est une vue partielle de côté d'une porte selon le second mode de réalisation.

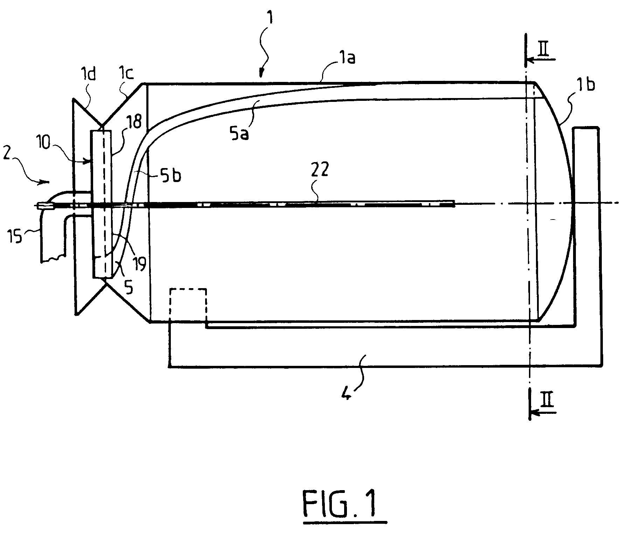

La baratte, montrée à la Fig. 1, est essentiellement constituée d'une cuve 1 comportant une partie cylindrique 1a d'axe horizontal qui est close, à l'arrière, par une paroi bombée 1b et qui est prolongée, vers l'avant, par deux parties tronconiques 1c et 1d de même axe que la partie cylindrique 1a. La partie 1c formé un entonnoir tourné vers l'extérieur dont la petite base définit l'ouverture 2. La partie 1d dont la petite base correspond à l'ouverture 2 s'évase vers l'extérieur et forme une collerette guidant les morceaux de viande quand ils sortent de la cuve. L'ouverture 2, à la base de la partie 1c, peut être obturée hermétiquement par une porte de barattage du type de celle qui est décrite dans le document FR-2 624 242 ou par une porte de lavage 10.

La cuve 1 est montée sur un bâti 4, comportant un mécanisme d'entraînement en rotation de la cuve dans un sens ou dans l'autre et à une vitesse de quelques dizaines de tours par minute. Le mécanisme d'entraînement ne faisant pas partie de l'invention ne sera pas décrit en détail.

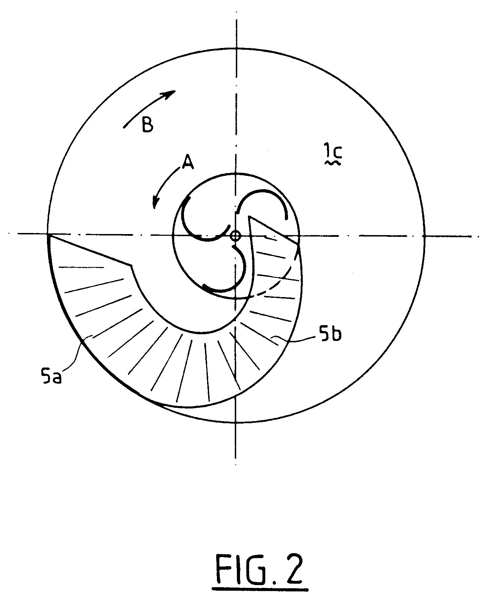

A l'intérieur de la cuve 1, est prévue une lame 5 qui comporte une partie 5a qui, dans la partie cylindrique 1a de la cuve 1, est fixée sur la paroi intérieure de la cuve 1 selon une hélice dont le pas est supérieur à la longueur de la cuve 1 et une partie 5b qui, dans la partie tronconique 1c de la cuve 1, est fixée sur la paroi intérieure de cette partie 1c, selon une autre hélice de pas plus court. Dans un plan diamétral, les profils des hélices sont inclinés par rapport au rayon correspondant de manière que, lorsqu'on tourne dans le sens de la flèche A, Fig. 2, pour arriver à un certain niveau, son bord interne est en avance sur son bord externe.

La lame 5 a un double rôle. Le premier, quand elle tourne dans le sens de la flèche A, consiste à entraîner et soulever les morceaux de viande depuis le fond de la cuve 1 pour, une fois arrivés, dans un plan diamétral, à une certaine hauteur, les laisser retomber au fond de la cuve. Dans le sens de la flèche A, la baratte est entraînée en rotation de manière à entraîner les morceaux de viande vers l'arrière de la baratte. Le second rôle est obtenu en faisant tourner la baratte dans le sens inverse, c'est-à-dire dans le sens de la flèche B. Les morceaux de viande malaxés sont alors amenés, par l'effet d'entraînement de la lame 5, vers l'ouverture 2 où ils peuvent être déchargés, la porte de barattage ayant été enlevée.

Le type de baratte qui vient d'être décrit n'est pas le seul sur lequel la porte de lavage de l'invention peut être montée. Sa description n'en limite pas la portée mais permet seulement de mieux comprendre l'invention, dans sa forme et sa fonction.

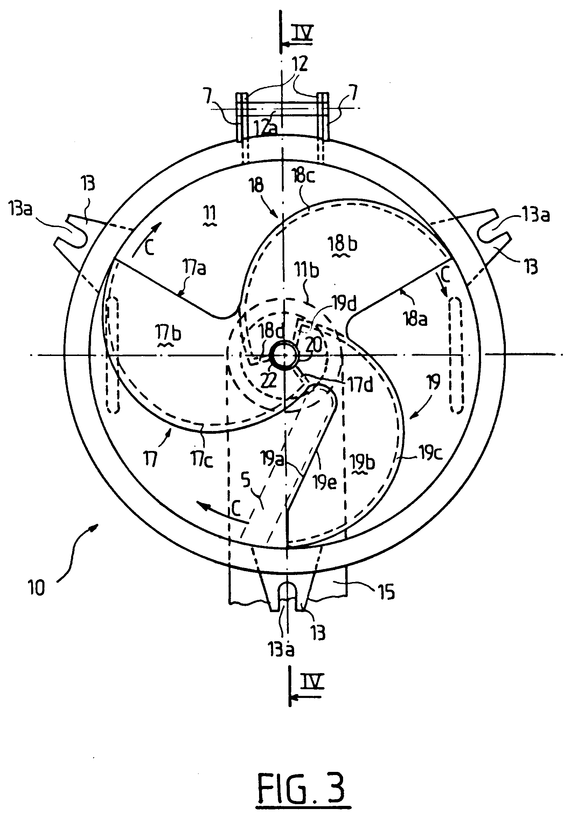

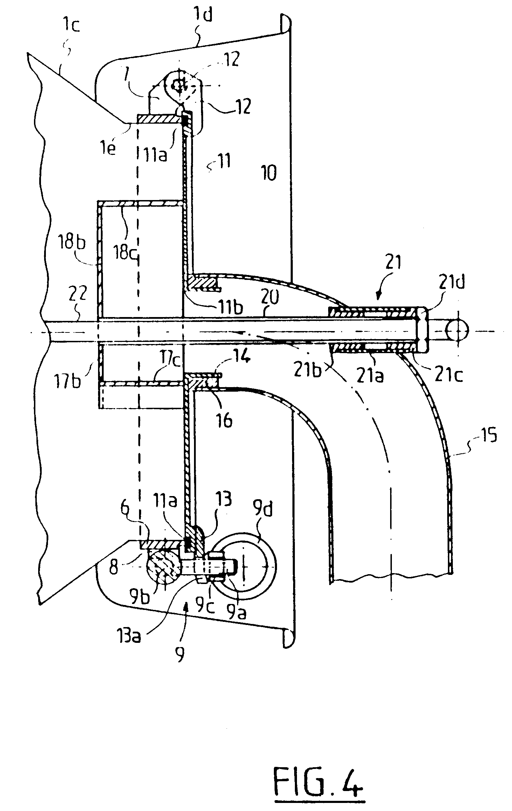

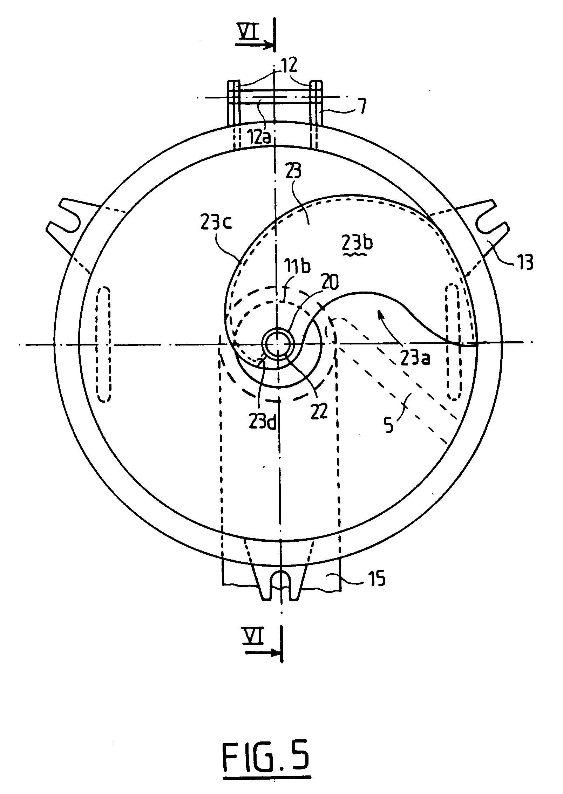

La porte de lavage 10 selon l'invention est montrée en détail dans un premier mode de réalisation, aux Figs. 3 et 4 et, dans un second mode, aux Figs. 5 à 7. Sur la Fig. 4, on voit, en plus, de la porte 10 l'extrémité avant de la partie tronconique 1c et la partie 1d, la partie 1c se terminant, à l'avant, par un col cylindrique 1e.

La porte de lavage 10 est constituée d'un disque rigide 11 recevant, dans une rainure circulaire prévue à la périphérie de sa face arrière, un joint d'étanchéité annulaire 11a. Le joint 11a peut être amené en contact avec la face avant plane d'une virole d'appui 6 montée sur le pourtour du col 1e.

Une chape 12 solidaire du disque 11 est prévue pour recevoir un axe 12a qui est perpendiculaire à l'axe du disque 11 et dont les extrémités peuvent respectivement reposer sur des pattes 7 soudées radialement à la périphérie de la virole 6.

A la périphérie du disque 11, sont montées radialement et régulièrement espacées autour du disque 11, des pattes 13 pourvues, chacune, d'une lumière 13a. Sur la virole 6, sont montées par paires, en face des pattes 13, des paires de crochets 8. Chaque paire 8 est prévue pour recevoir un moyen de serrage 9 constitué d'une tige filetée 9a montée perpendiculairement à un axe 9b et recevant un écrou 9c qui peut être entraîné par un anneau 9d. La porte 10 en place, les extrémités de chaque axe 9b sont engagées dans les crochets 8 correspondant et l'écrou 9c vient en appui sur les bords de la lumière 13a de la patte 13 correspondante, ce qui a pour effet de presser la porte 10 contre la virole 6. Ce montage rappelle celui de la porte de barattage décrite dans le document FR-2 624 242 sans les précautions prises pour tenir compte de l'augmentation de pression dans la cuve au cours du barattage. En effet, au cours du lavage, une simple étanchéité à l'eau de la cuve suffit.

Le disque 11 est percé en son centre d'un trou 11b à la périphérie duquel est fixée l'extrémité d'un tube de guidage axial 14. Un tuyau d'évacuation 15 en forme de coude reçoit, sur la surface interne d'une de ses extrémités, la surface extérieure d'un coussinet cylindrique 16 dont la surface intérieure est montée sur la surface extérieure du tube de guidage 14 pour y être guidée en rotation. L'autre extrémité du tuyau 15 est branchée à une bouche d'évacuation des eaux usées (non représentée).

La face interne du disque 11 est pourvue de trois godets identiques 17, 18 et 19 placés à 120° l'un de l'autre. Chacun d'eux a son ouverture 17a, 18a, 19a sensiblement dans un plan radial et son intérieur est en communication, via le trou 11b percé dans le disque 11, avec l'intérieur du tuyau d'évacuation 15. Chaque godet est formé de trois parois: une première qui est constituée par la face interne du disque 11 de la porte elle-même, une seconde 17b, 18b, 19b constituée par une unique plaque en forme d'"hélice plane" qui est parallèle à la surface du disque 11 et une paroi 17c, 18c, 19c perpendiculaire, d'une part, à la paroi 11, d'autre part, à la paroi 17b, 18b, 19b. Les deux premières parois 11 et 17b, 18b, 19b forment les parois latérales d'un godet 17, 18, 19 et la troisième paroi 17c, 18c, 19c forme son fond. La troisième paroi 17c, 18c, 19c est bombée avec une extrémité qui part tangentiellement au bord du disque 11 et l'autre extrémité qui présente, au-delà du centre du disque 11, une partie 17d, 18d, 19d rabattue vers l'axe du disque 11. Elle est bombée, par exemple, en forme de demi-cercle dont le diamètre est superposé à un rayon du disque 11 et a une longueur légèrement supérieure à ce rayon.

Les fonds 17c, 18c et 19c des godets 17, 18 et 19 sont en retrait par rapport à leurs ouvertures 17a, 18a et 19a de manière que, lorsque la baratte tourne dans le sens correspondant à celui de son déchargement, comme l'indique la flèche C de la Fig. 3, les ouvertures 17a, 18a et 19a sont en avance sur les fonds 17c, 18c et 19c correspondants.

La paroi 19b est pourvue d'une échancrure 19e dont le rôle est de laisser de l'espace pour l'extrémité avant de la lame 5.

En bout des extrémités des parties rabattues 17d, 18d et 19d, est fixée axialement, par sa paroi externe, l'extrémité d'un tube 20 dont l'autre extrémité est montée dans un moyen de guidage axial 21 solidaire du tuyau d'évacuation 15 et le traversant. Le moyen 21 est constitué d'une douille 21a engagée et soudée dans un trou prévu dans le tuyau 15. A l'intérieur de la douille 21a, sont guidés en rotation deux coussinets 21b et 21c rendus solidaires du tube 20, respectivement par montage à force et par un écrou 21d vissé sur le tube 20.

A l'intérieur du tube 20, est montée, avec relativement peu de jeu, une canne 22 dont une extrémité est raccordée à une source d'eau, non montrée, et l'autre extrémité, à l'intérieur de la cuve 1, comporte des ajutages, non montrés. La canne 22 peut être télescopique.

A la Fig. 5, on a représenté un autre mode de réalisation de la présente invention. Dans ce mode, on n'a prévu qu'un godet 23 pourvu d'une ouverture 23a et constitué d'une paroi 23b dont la périphérie est, d'un côté, en développante de cercle et de l'autre avec une échancrure pour pouvoir recevoir la lame 5. Il comprend également une paroi latérale 23c dont une extrémité est tangente, une fois la porte 10 montée sur la baratte, à la paroi le de la baratte et dont l'autre extrémité, plus basse et au delà de l'axe de la baratte par rapport à la précédente, se termine par une paroi radiale 23d soudée par le chant sur la périphérie du tube 20. L'ouverture 23a est orientée de la même manière que le sont les ouvertures 17a, 18a et 19a des godets 17, 18 et 19. On a représenté en pointillés fins la lame 5 de la baratte afin de préciser son emplacement par rapport au godet 23. On remarque que son extrémité entre légèrement, par son ouverture 23a, à l'intérieur du godet 23.

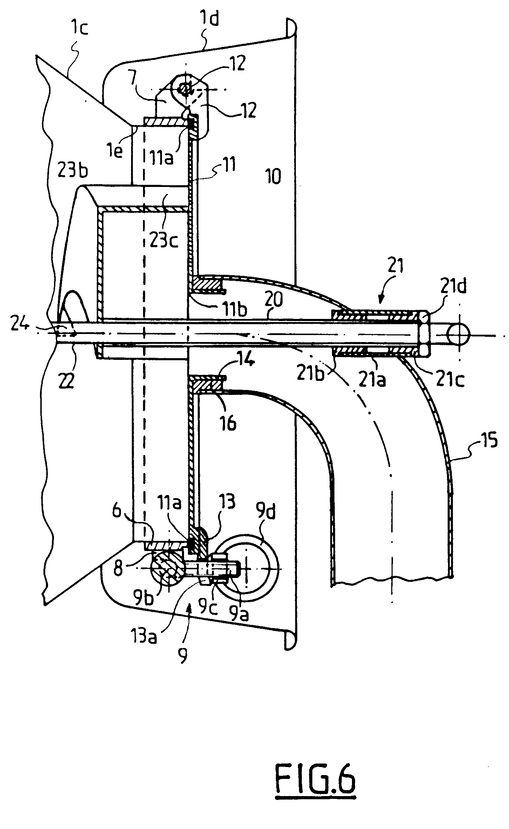

On remarquera, sur la Fig. 6, que la paroi 23b est inclinée vers l'axe de la baratte afin que la surface de collecte du godet 23 soit plus importante sur la périphérie de la porte qu'au centre. On voit également un gousset 24 constitué d'une partie de la paroi latérale 23c qui est rabattue vers le fond du godet 23. Le gousset 24 évite que l'eau présente dans le godet 23 n'en sorte quand l'ouverture 23a est tournée vers le bas.

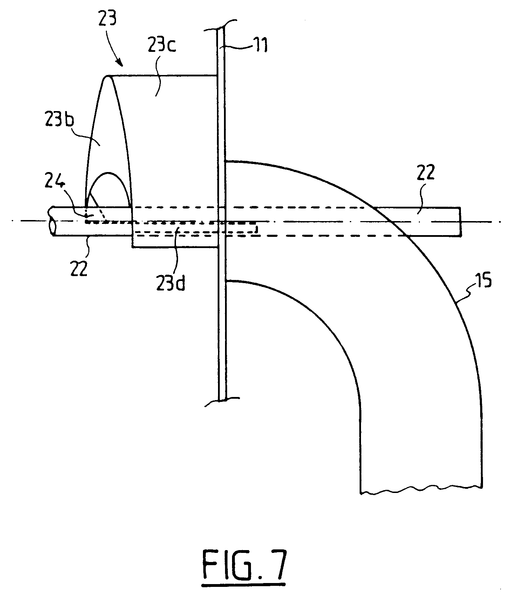

Enfin, sur la Fig. 7, on peut voir que la paroi 23d est plus longue qu'est large le godet 23 et qu'une de ses extrémités se trouve à l'intérieur du tuyau de vidange 15. Cette dernière disposition permet d'éviter que l'eau contenue dans le godet 23 ne s'échappe en passant derrière cette extrémité.

L'utilisation d'une porte de lavage selon l'invention est la suivante. Après barattage des viandes, la porte de barattage normale est retirée et la cuve 1 est vide. On met alors en place sur l'ouverture avant 2 de la baratte une porte de lavage 10 selon l'invention et on installe la canne 22 en la faisant glisser à l'intérieur du tube 20 jusqu'à ce que son extrémité qui comporte les ajutages soit sensiblement au centre de la partie cylindrique la de la cuve 1. Elle est raccordée, par son autre extrémité, à une source d'alimentation en eau. La canne 22 permet l'introduction de l'eau de lavage à l'intérieur de la baratte. Celle-ci est alors mise en rotation selon son axe principal pendant un temps prédéterminé assurant le lavage interne de la cuve.

Puis la cuve 1 est débarrassée de son eau usée. La baratte tourne dans le sens de la flèche B, de manière que cette eau soit entraînée, par la lame 5, vers la porte 10 où elle est collectée et déversée dans le tuyau 15.

Au début de l'opération le flux d'eau de lavage peut être important. L'eau usée est alors collectée par celui des godets 17, 18 ou 19 dont l'ouverture 17a, 18a, 19a est tournée vers le haut. Le godet correspondant se remplit, puis en tournant il se vide par le trou 11a, dans le tuyau 15. L'eau est alors évacuée. Pendant ce temps, le godet suivant a, à son tour, l'ouverture tournée vers le haut. Il collecte l'eau qu'il déversera dans le tuyau 15 après avoir tourné d'un certain angle.

Au bout de quelques minutes, peu d'eau reste dans le fond de la cuve 1 et ce peu d'eau est entraîné et guidé par la lame 5 vers le godet 19. L'eau est ensuite évacuée, par le trou 11a, dans le tuyau 15.

Lorsqu'il n'y a plus d'eau de lavage dans la baratte, on effectue un rinçage qui consiste à faire couler de l'eau claire dans la baratte et à l'évacuer, comme précédemment, par le tuyau 15.

Une fois le rinçage effectué, la canne télescopique 22 est retirée et la porte de lavage 10 est ôtée.

Le fonctionnement d'une porte selon le second mode de réalisation de l'invention est sensiblement le même que le fonctionnement de celle à trois godets. En effet, dans la configuration montrée à la Fig. 3, c'est essentiellement le godet 19 qui recueille l'eau de lavage, si bien que le fonctionnement du mode de réalisation à un seul et unique godet 23 donne entière satisfaction.

L'avantage de l'invention réside dans le fait que l'eau usée est récupérée et amenée à une bouche de récupération des eaux usées. Le lieu où elle est installée reste donc propre. A noter également que la canne d'introduction 22 se monte avec la porte de lavage 10 ce qui évite toute perte et permet d'économiser l'eau de lavage.

Notons encore que la porte de la présente invention a été décrite et représentée sur les Figs. jointes pour un sens de rotation de la baratte donné par les flèches A et B de la Fig. 2. L'invention couvre également des portes de lavage qui seraient prévues pour des barattes tournant en sens inverses de ceux donnés par les flèches A et B. Dans ce cas, les godets 17, 18 et 19 et le godet 23 sont, vus de face, symétriques par rapport à un plan radial de la baratte.

## Revendications

1. Porte de baratte servant au lavage de celle-ci, ladite baratte étant constituée d'une cuve (1) sensiblement cylindrique d'axe horizontal dont une extrémité est close par une paroi (1b) et dont l'autre extrémité comporte une ouverture (2), ladite porte étant pourvue de moyens pour venir obturer hermétiquement ladite ouverture (2), caractérisée en ce qu'elle comporte un disque (11) percé d'un trou central (11b) duquel part, côté externe de la porte, un tuyau (15) d'évacuation des eaux usées, ledit disque (11) étant tournant par rapport audit tuyau (15), au moins un godet (17, 18, 19, 23) placé côté interne de la porte a son ouverture (17a, 18a, 19a, 23a) qui est dans un plan radial et sa paroi de fond (17c, 18c, 19c et 23c) qui est en retrait, pour le sens de rotation de la baratte pendant l'opération de lavage, par rapport a son ouverture (17a, 18a, 19a, 23a), ledit godet étant en communication, par une de ses faces latérales et via le trou (11b), avec l'intérieur du tuyau (15).

2. Porte selon la revendication 1, caractérisée en ce qu'elle comporte une pluralité de godets (17, 18 et 19) identiques et placés régulièrement autour de l'axe du disque (11) dont les ouvertures (17a, 18a et 19a) sont sensiblement dans un plan radial et les parois de fond (17c, 18c et 19c) en retrait par ces ouvertures.

3. Porte selon la revendication 1 ou 2, caractérisée en ce qu'une canne (22) d'alimentation en eau de lavage est montée sur ladite porte et la traverse de part en part, une de ses extrémités se trouvant à l'intérieur de la cuve (1), ladite canne passant au milieu du trou central du disque et traversant aussi le tuyau.

4. Porte selon une des revendications précédentes, caractérisée en ce que chaque godet a une première paroi latérale constituée par le disque (11) lui-même, une seconde paroi (17a, 18a, 19a, 23a) parallèle à la surface du disque (11) et une paroi de fond (17c, 18c, 19c, 23c) perpendiculaire aux deux autres parois.

5. Porte selon la revendication 4, caractérisée en ce que la paroi de fond (17c, 18c, 19c, 23c) de chaque godet est bombée avec une extrémité qui part tangentiellement au bord du disque (11).

6. Porte selon la revendication 5, caractérisée en ce que la paroi de fond (17c, 18c, 19c, 23c) de chaque godet est bombée en demi-cercle dont le diamètre est sur un diamètre du disque (11) et a une longueur supérieure au rayon du disque (11).

7. Porte selon une des revendications 4 à 6, caractérisée en ce que la paroi de fond (17c, 18c, 19c, 23c) de chaque godet (17, 18, 19, 23) comporte, au-delà du centre du disque, une partie (17d, 18d, 19d, 23d) qui est rabattue vers l'axe du disque (11).

## Claims

1. Churn door serving for the washing of the latter, the said churn comprising a vat (1) substantially cylindrical with horizontal axis, one end of which is closed by a wall (1b) and the other end of which comprises an opening (2) the said door being provided with means for sealing the said opening (2), characterised in that it comprises a disc (11) pierced by a central hole (11b) from which there leaves, outer side of the door, a used water evacuation pipe (15), the said disc (11) turning in relation to the said tube (15) by means of a bucket (17,18,19,23) placed on the inner side of the door has its opening (17a,18a,19a,23a) which is in a radial plane and its bottom wall (17c,18c,19c and 23c) which is set back for the direction of rotation of the churn during the washing operation, in respect of its opening (17a,18a,19a,23a) the said bucket being in communication, through one of its lateral faces and via the hole (11b), with the inside of the pipe (15).

2. Door according to claim 1, characterised in that it comprises a pluality of identical buckets (17,18 and 19) and placed regularly around the axis of the disc (11) the openings (17a,18a and 19a) of which are substantially in a radial plane and the bottom walls (17c,18c and 19c) set back by these openings.

3. Door according to claim 1 or 2, characterised in that a washing water supply rod (22) is mounted on the said door and traverses right through it, one of its ends being inside the vat (1) the said rod passing in the middle of the central hole of the disc and also passing through the pipe.

4. Door according to one of the preceding claims, characterised in that each bucket has a first lateral wall constituted by the disc (11) itself, a second wall (17a, 18a, 19a, 23a) extended in parallel to the surface of the disc (11) and a bottom wall (17c, 18c, 19c, 23c) extended perpendiculary to the other two walls.

5. Door according to claim 4, characterised in that the bottom wall (17c, 18c, 19c, 23c) of each bucket is convex having an end which is extended tangentially therefrom up to the edge of the disc (11).

6. Door according to claim 5, characterised in that the bottom wall (17c, 18c, 19c, 23c) of each bucket is convex in a semi-circle the diameter of which is oriented on a diameter of the disc (11) and has a length greater than the radius of the disc (11).

7. Door according to one of the claims 4 to 6, characterised in that the bottom wall (17c, 18c, 19c, 23c) of each bucket (17, 18, 19, 23) comprises, beyond the centre of the disc, a part (17a, 18a, 19a, 23a) which is turned down towards the axis of the disc (11).

## Patentansprüche

1. Tür eines Rührgefäßes, die zum Waschen/Reinigen dieses Gefäßes dient, wobei das besagte Rührgefäß aus einer zylindrischen Wanne (1) mit waagerechter Achse besteht, deren eines Ende durch eine Wandung (1b) verschlossen ist und deren anderes Ende eine Öffnung (2) aufweist, und wobei das besagte Rührgefäß mit Mitteln ausgestattet ist, um ein hermetisches Verschließen der besagten Öffnung (2) zu gewährleisten, dadurch gekennzeichnet, daß die Tür eine Scheibe (11) umfaßt, die von einem Mittelloch (11b) durchbrochen ist, an das sich seitlich an der Außenseite der Tür ein Abflußrohr (15) zur Entleerung des Abwassers anschließt, wobei die besagte Scheibe (11) in Bezug auf das Rohr (15) drehbar ist, wobei mindestens ein Becher (17, 18, 19, 23) an der Innenseite der Tür angeordnet ist, der eine Öffnung (17a, 18a, 19a, 23a) hat, welche in einer Radialebene liegt, und eine Bodenwandung (17c, 18c, 19c, 23c), die in Bezug auf die Drehbewegung des Rührgefäßes während des Waschvorgangs von seiner Öffnung (17a, 18a, 19a, 23a) zurückliegt, und wobei der besagte Becher durch eine seiner Seitenwandungen und über das Loch (11b) mit dem Innern des Rohrs (15) in Verbindung steht.

2. Tür nach Anspruch 1, dadurch gekennzeichnet, daß sie eine Vielzahl von Bechern (17, 18 und 19) enthält, die identisch und regelmäßig um die Achse der Scheibe (11) herum angeordnet sind, deren Öffnungen (17a, 18a und 19a) in einer Radialebene liegen und deren Bodenwandungen (17c, 18c und 19c) von den Öffnungen zurückliegen.

3. Tür nach Anspruch 1 oder 2, dadurch gekennzeichnet, daß ein Versorgungsrohr (22) für Waschwasser an der besagten Tür montiert ist und sie durch und durch durchläuft, wobei sich eines seiner Enden im Innern der Wanne (1) befindet und das besagte versorgungsrohr sich durch die Mitte des Mittelloches der Scheibe und durch das Abflußrohr hindurch erstreckt.

4. Tür nach einem der vorangehenden Ansprüche, dadurch gekennzeichnet, daß jeder Becher eine aus der Scheibe (11) selbst bestehende erste Seitenwandung besitzt, eine zur Oberfläche der Scheibe (11) parallele zweite Wandung (17a, 18a, 19a, 23a) und einer Bodenwandung (17c, 18c, 19c, 23c) senkrecht zu den beiden anderen Wandungen.

5. Tür nach Anspruch 4, dadurch gekennzeichnet, daß die Bodenwandung (17c, 18c, 19c, 23c) von jedem Becher an einem Ende, das zum Rand der Scheibe (11) tangential liegt, gewölbt ist.

6. Tür nach Anspruch 5, dadurch gekennzeichnet, daß die Bodenwandung (17c, 18c, 19c, 23c) von jedem Becher im Halbkreis gewölbt ist, dessen Durchmesser auf einem Durchmesser der Scheibe (11) liegt und länger ist als der Radius der Scheibe (11).

7. Tür nach einem der Ansprüche 4 - 6, dadurch gekennzeichnet, daß die Bodenwandung (17c, 18c, 19c, 23c) von jedem Becher (17, 18, 19, 23) jenseits der Mitte der Scheibe eine Partie (17d, 18d, 19d, 23d) enthält, welche gegen die Achse gebogen ist.
